## Europäisches Patentamt

## European Patent Office

## Office européen des brevets

(19)

(11) Veröffentlichungsnummer: **0 243 795 B1**

(12) **EUROPÄISCHE PATENTSCHRIFT**

(45) Veröffentlichungstag der Patentschrift:
25.07.90

(51) Int. Cl.⁵: **B23K 37/00**

(21) Anmeldenummer: 87105558.8

(22) Anmeldetag: 14.04.87

(54) Vorrichtung zum Hindurchführen gerundeter Zargen durch eine Schweisszone.

(30) Priorität: 22.04.86 CH 1628/86

(43) Veröffentlichungstag der Anmeldung:
04.11.87 Patentblatt 87/45

(45) Bekanntmachung des Hinweises auf die Patenterteilung:
25.07.90 Patentblatt 90/30

(84) Benannte Vertragsstaaten:
CH DE ES FR GB GR IT LI NL SE

(56) Entgegenhaltungen:
DE-A- 2 559 671
DE-A- 2 820 188
DE-A- 2 907 391
US-A- 2 322 221
US-A- 3 371 839
US-A- 4 354 090

(73) Patentinhaber: ELPATRONIC AG, Baarerstrasse 117,
CH-6300 Zug(CH)

(72) Erfinder: Well, Wolfgang, Hattsteinstrasse 3,
D-7843 Heitersheim(DE)
Erfinder: Baumgartner, Michael, Hofackerstrasse 42,
CH-8953 Dietikon(CH)
Erfinder: Lanz, Andreas, Industriestrasse 32,
CH-8962 Bergdietikon(CH)

(74) Vertreter: Hotz, Klaus, Dipl.-El.-Ing. / ETH, c/o
SOUDRONIC AG Industriestrasse 35 Postfach 11,
CH-8962 Bergdietikon(CH)

## Beschreibung

Die Erfindung betrifft eine Vorrichtung zum Hindurchführen gerundeter Werkstücke aus Blech durch die Schweisszone einer Maschine zum Verschweissen der Längsränder der Werkstücke, mit Gruppen von beweglichen Führungselementen, die einander in bezug auf die Werkstücke gegenüberliegen und auf diese radiale Führungskräfte ausüben, wobei die Führungselemente jeder Gruppe an einer endlosen, um ein Antriebsrad und ein Spannrad geführten Kette angeordnet sind, die einen in Bewegungsrichtung der Werkstücke verlaufenden Kettenstrang aufweist, der beiderseits einer die Schweisszone enthaltenden, zur genannten Bewegungsrichtung normalen Ebene durch eine Schiene abgestützt ist.

Eine bekannte Vorrichtung dieser Art (DE-A1 2 907 391) dient zum Führen von Rohren beim Längsnahtschweissen. Dabei sind zwei je eine Kette mit Führungselementen tragende Einheiten zu beiden Seiten zwecks Einstellung der Werkstückführung zwar in bezug aufeinander als Ganzes positionierbar. Es besteht bei dieser Art von Führung jedoch die Schwierigkeit, dass der von den Führungselementen gebildete Führungskanal auf seiner ganzen Länge praktisch geschlossen ist und unzugänglich bleibt. Dies erweist sich bei der Durchführung von Wartungs- und Einstellarbeiten wie auch bei der Behebung von Störungen – z.B. entfernen von Fremdkörpern – als nachteilig.

Bei einer anderen bekannten Vorrichtung (DE-A1 2 559 671), die zur Führung von gerundeten Blechzargen, also einzelner, aufeinanderfolgender Werkstücke dient, sind als Führungselemente diaboloartige Rollen rings um die Bewegungsachse herum angeordnet und zum Teil radial federnd abgestützt. Solche um je eine eigene Achse drehbare Führungselemente erfüllen ihren Zweck einwandfrei, wenn die Zargen einen Durchmesser in der Grössenordnung von 50 mm oder mehr haben, insbesondere wenn die Längsränder der Zargen in einer Ueberlappt-Quetschnaht verschweisst werden.

Schwierigkeiten können jedoch dann auftreten, wenn der Zargendurchmesser kleiner als 50 mm ist und/oder die Längsränder der Zargen miteinander stumpf verschweisst werden, insbesondere mittels Laserstrahl. In solchen Fällen kann die Qualität der Schweissnaht durch kaum merkliche Stösse vermindert werden, die jeweils dann auftreten, wenn eines der zahlreichen im Bereich der Schweisszone angeordneten rollenförmigen Führungselemente erst über das vordere und später über das hintere Ende einer Zarge rollt.

Der Erfindung liegt deshalb die Aufgabe zugrunde, eine Vorrichtung der eingangs genannten Art derart zu gestalten, dass der Führungskanal für die Werkstücke rasch und einfach zugänglich gemacht werden kann. Insbesondere soll sich die Vorrichtung auch zur Führung einzelner, aufeinanderfolgender Werkstücke (Zargen) kleinen Durchmessers von beispielsweise 32 oder 25 mm, und insbesondere zum Laserschweissen der Längsränder solcher Zargen eignen. Zargen derart kleinen Durchmessers sind vor allem für Gehäuse elektrischer Batterien erforderlich.

Die Aufgabe ist bei einer Vorrichtung der eingangs genannten Gattung erfindungsgemäss dadurch gelöst, dass wenigstens eine der Ketten zusammen mit der zugehörigen Schiene und dem Spannrad um das zugehörige Antriebsrad herum von der gegenüberliegenden Kette wegschwenkbar ist.

Mit der Erfindung wird erreicht, dass die Führungselemente, welche entlang den Schienen die Werkstückführung zu beiden Seiten der Bewegungsachse bilden, ohne Umstände getrennt werden können, um Wartungsarbeiten vorzunehmen oder etwa verklemmte Werkstücke zu entfernen. Dabei werden stossartige Einwirkungen auf durchlaufende Zargen in der Nähe der Schweissebene vermieden.

Es ist vorteilhaft, wenn jede der mit der zugeordneten Kette wegschwenkbaren Schienen an zwei Federn radial abgestützt ist, die in Förderrichtung gegeneinander versetzt und unabhängig voneinander einstellbar sind. Mit dieser Einstellmöglichkeit lässt sich auf besonders einfache Weise erreichen, dass die Längsränder der Werkstücke in der Schweisszone eine genau vorbestimmte Lage in bezug zueinander haben, sich also entweder um einen bestimmten Betrag überlappen, wenn eine Ueberlapptschweissnaht hergestellt werden soll, oder stumpf aneinanderliegen, wenn insbesondere mit einem Laserstrahl, eine Stumpfschweissnaht gebildet werden soll.

In einer Längsmittelebene der erfindungsgemässen Vorrichtung kann, wie üblich, eine die Längsränder der Werkstücke führende Gleitschiene angeordnet sein, insbesondere eine Schiene mit Z-förmigem Profil, die üblicherweise als Z-Schiene bezeichnet wird. Dabei ist es vorteilhaft, wenn gemäss einem weiteren Merkmal der Erfindung der Gleitschiene diametral gegenüber eine die Werkstücke zusätzlich führende Magnetschiene angeordnet ist.

Schliesslich ist es von Vorteil, wenn förderstromaufwärts von den Ketten eine Führungshülse angeordnet ist, die sich in Bewegungsrichtung der Werkstücke trichterförmig verengt und mindestens einen axialen Schlitz aufweist, längs dessen eine Klinke zum Einschieben von aufeinanderfolgenden Werkstücken zwischen den Ketten bewegbar ist. Es ist denkbar, dass die Werkstücke in bekannter Weise, z.B. mittels hin- und hergehender Mitnehmer, durch die Schweissebene hindurchgefördert werden oder nur bis zur Schweissebene gefördert und dann von Elektrodenrollen weiterbewegt werden.

Beim Hindurchführen von aufeinanderfolgenden Werkstücken gegebener Länge ist es schliesslich zweckmässig, wenn jede der Schienen sich ununterbrochen und geradlinig zwischen einem Anfang und einem Ende erstreckt, deren Abstand von der Schweissebene grösser ist als die Länge jedes einzelnen Werkstücks.

Ein Ausführungsbeispiel der Erfindung wird im folgenden anhand schematischer Zeichnungen mit weiteren Einzelheiten erläutert. Es zeigt:

Fig. 1 eine erfindungsgemäße Vorrichtung in Draufsicht,

Fig. 2 dieselbe Vorrichtung in teilweise demontiertem Zustand und teilweise in einem waagerechten Schnitt,

Fig. 3 den Schnitt in der senkrechten Ebene III-III in Fig. 1,

Fig. 4 den Schnitt in der senkrechten Ebene IV-IV in Fig. 1,

Fig. 5 den Schnitt in der senkrechten Ebene V-V in Fig. 1 und

Fig. 6 die Vorrichtung in einer der Fig. 1 entsprechenden Draufsicht, jedoch in geöffnetem Zustand.

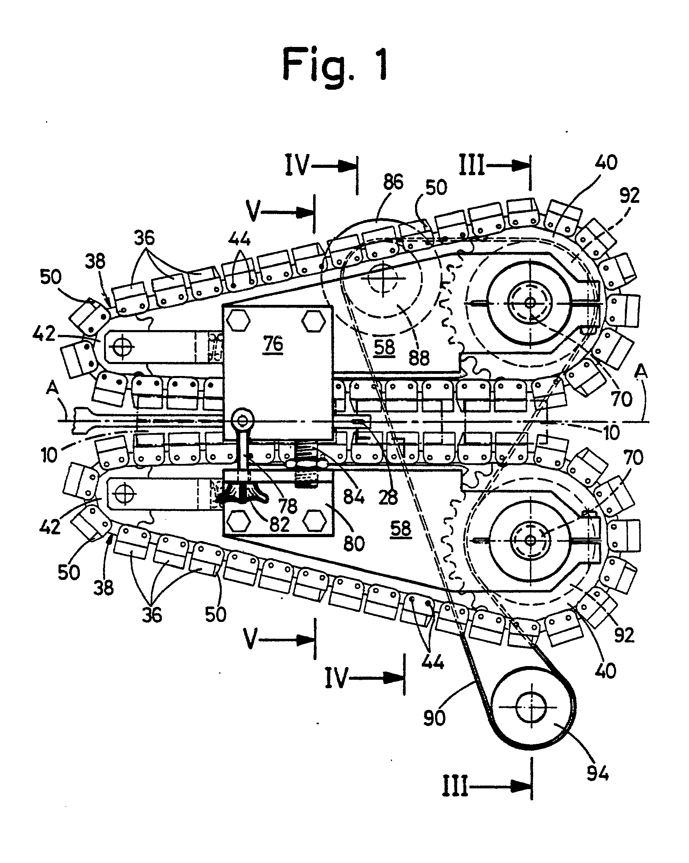

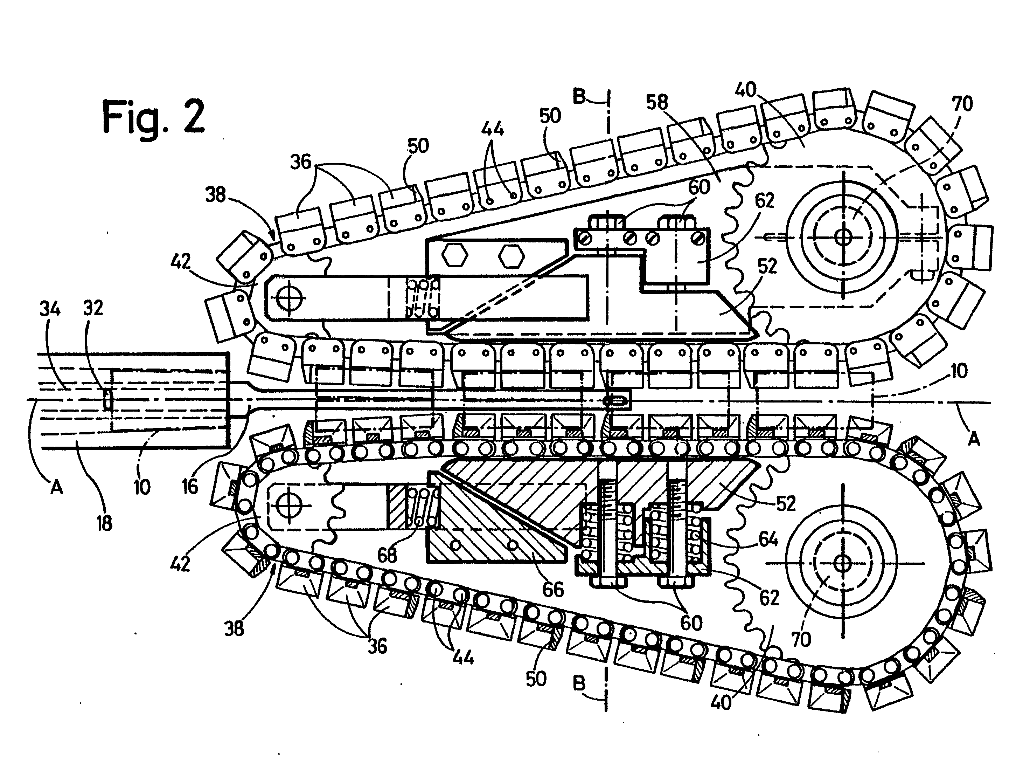

Die dargestellte Vorrichtung hat die Aufgabe, zylindrisch um eine Achse A gerundete Zargen 10, die beispielsweise aus unbeschichtetem Stahlblech oder aus Weißblech bestehen, derart zu führen, daß ihre Längsränder 12 und 14 fest aneinanderliegend miteinander verschweißt werden können, während die Zargen 10 längs ihrer Achse A vorwärts, in Fig. 1 und 2 von links nach rechts, durch eine zur Achse A normale Schweißebene B hindurchbewegt werden. Solche geschweißten Zargen sind insbesondere als Gehäuse für elektrische Batterien vorgesehen.

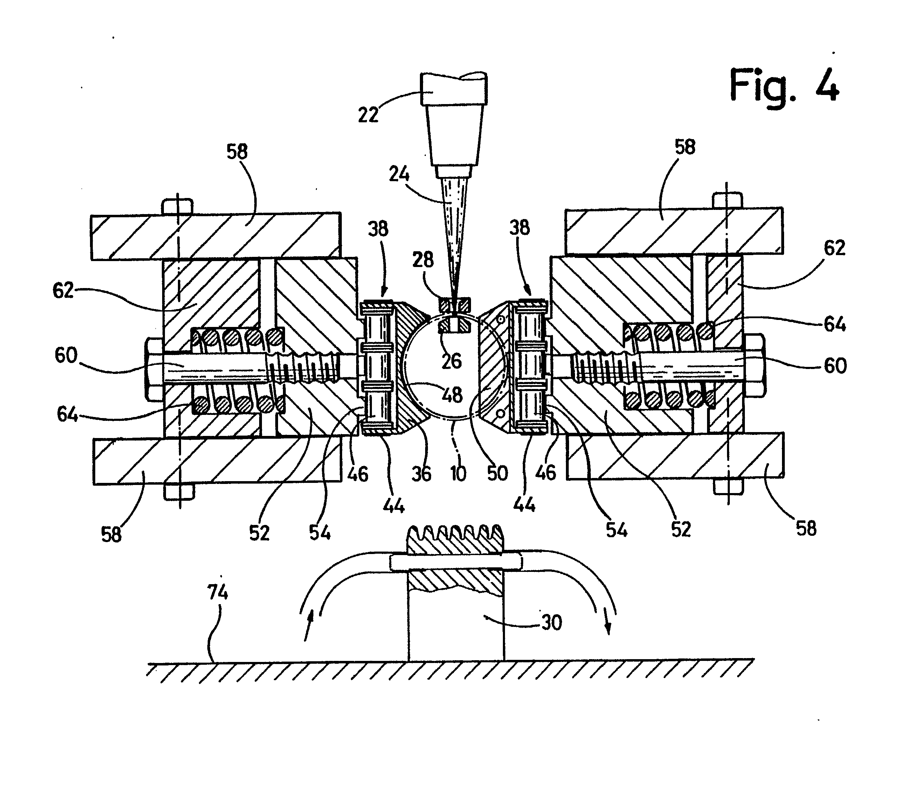

Die Zargen 10 sind, ehe sie die dargestellte Vorrichtung erreichen, von einer Rundvorrichtung üblicher Bauart um einen ortsfesten unteren Arm 16 herum gerollt worden, der sich parallel zu der in üblicher Weise waagerechten Achse A durch eine ebenfalls ortsfeste Führungshülse 18 hindurcherstreckt und mittig in die dargestellte Vorrichtung hineinragt. In Förderrichtung der Zargen 10 stromabwärts von der Führungshülse 18 ist auf dem unteren Arm 16 eine ebenfalls übliche Gleitschiene 20 von Z-förmigem Profil befestigt, an der die Längsränder 14 und 16 der Zargen geführt sind. Die Gleitschiene 20 endet kurz vor der Schweißebene B, in der eine Laserkanone 22 angeordnet ist, deren Strahl 24 in Fig. 4 angedeutet ist. Im Bereich des Strahls 24 laufen die Längsränder 12 und 14 zwischen einem vorderen Endabschnitt 26 des unteren Arms 16 und einem über diesem angeordneten Gleitschuh 28 hindurch, die beide derart gelocht sind, daß sie den Strahl 24 nicht behindern. Senkrecht darunter ist ein gekühlter Absorber 30 angeordnet.

Zum Hindurchschieben der Zargen 10 durch die Führungshülse 18 ist eine Klinke 32 vorgesehen, die mittels einer nicht dargestellten, üblichen Antriebsvorrichtung, beispielsweise von der Art eines Kurbeltriebs, parallel zur Achse A hin- und herbewegbar ist und jeweils bei ihrer Vorwärtsbewegung durch einen axialen Schlitz 34 der Führungshülse 18 in deren Innenraum hineinragt. Jede Zarge 10, die aus der Führungshülse 18 austritt, wird von zwei Gruppen von Führungselementen 36 erfaßt, die an je einer endlosen Kette 38 angeordnet sind.

Die beiden Ketten 38 sind in der Betriebsstellung der Vorrichtung in bezug auf die Achse A symmetrisch angeordnet, haben je einen zu dieser parallelen, vorwärtslaufenden Kettenstrang und erstrecken sich in einer waagerechten Ebene um je ein Antriebsrad 40 und je ein Kettenspannrad 42. Von den Kettenspannrädern 42 aus konvergieren die Ketten 38 zu ihren achsparallelen Kettensträngen hin.

Im dargestellten Beispiel sind beide Ketten 38 als Dreifachrollenketten ausgebildet; ihre Glieder sind miteinander durch Gelenkbolzen 44 verbunden, auf denen je drei Rollen 46 gelagert sind. Jedes der Führungselemente 36 ist an zwei benachbarten Gelenkbolzen 44 befestigt und hat eine zylindrische Anlagefläche 48, deren Durchmesser mit dem Außendurchmesser der Zargen 10 übereinstimmt.

Jede der Zargen 10 wird bei der dargestellten Zargenlänge an ihren beiden Seiten von je drei Führungselementen 36 erfaßt und längs der Achse A durch die Schweißebene B hindurchgeführt. Am letzten der je drei Führungselemente 36 ist ein Mitnehmer 50 befestigt. Die Mitnehmer 50 an den beiden achsparallelen Kettensträngen stehen einander paarweise gegenüber, sodaß jede Zarge 10 von einem Paar Mitnehmer 50, das sich an ihr hinteres Ende anlegt, erfaßt und somit auch dann zuverlässig durch die Schweißebene B hindurchbewegt wird, wenn die radialen Kräfte, mit denen die Führungselemente 36 über ihre Anlageflächen 48 auf die Zargen 10 einwirken, zu schwach sein sollten, um zum Mitnehmen der Zargen ausreichende Reibungskräfte zu erzeugen.

Die Größe der genannten radialen Kräfte wird dadurch bestimmt, daß der gerade Kettenstrang jeder der beiden Ketten 38 an einer Schiene 52 abgestützt ist. Jede der Schienen 52 hat drei parallel zur Achse A übereinander angeordnete Führungsrippen 54, auf denen die Rollen 46 der zugehörigen Kette 38 laufen. Die Länge der Führungsrippen 54 vor und hinter der Schweißebene B ist größer als die Zargenlänge; infolgedessen ist jede Zarge 10 über die sie begleitenden Führungselemente 36 von einem Zeitpunkt, ehe das vordere Ende der Zarge die Schweißebene B erreicht, bis zu einem Zeitpunkt, nach dem ihr hinteres Ende die Schweißebene verlassen hat, erschütterungsfrei geführt.

Jede der beiden Schienen 52 ist verschiebbar zwischen zwei Gleitplatten 56 geführt, die an je einer Wange 58 befestigt sind. In jede der Schienen 52 sind zwei Gewindebolzen 60 eingeschraubt, die sich in einer waagerechten Ebene radial zur Achse A erstrecken und in einer Stütze 62 geführt sind, die zwischen den beiden zugehörigen Wangen 58 befestigt ist. Zwischen jeder der beiden Schienen 52 und der zugehörigen Stütze 62 sind zwei Druckfedern 64 eingespannt, die rings um je einen der Gewindebolzen 60 angeordnet sind und die Schiene mit einer Stützkraft in der Größenordnung von beispielsweise 25 bis 30 kg abstützen. Auf diese Weise ist der achsparallele Kettenstrang jeder der beiden Ketten 38 durch die zugehörige Schiene 52 in einer bezüglich der Achse A radialen Richtung einstellbar abgestützt.

In der Nachbarschaft der Schienen 52 ist an den jeweils zugehörigen Wangen 58 eine weitere Stütze 66 befestigt, an der das zugehörige Kettenspannrad 42 verschiebbar geführt und ebenfalls über eine Druckfeder 68 abgestützt ist.

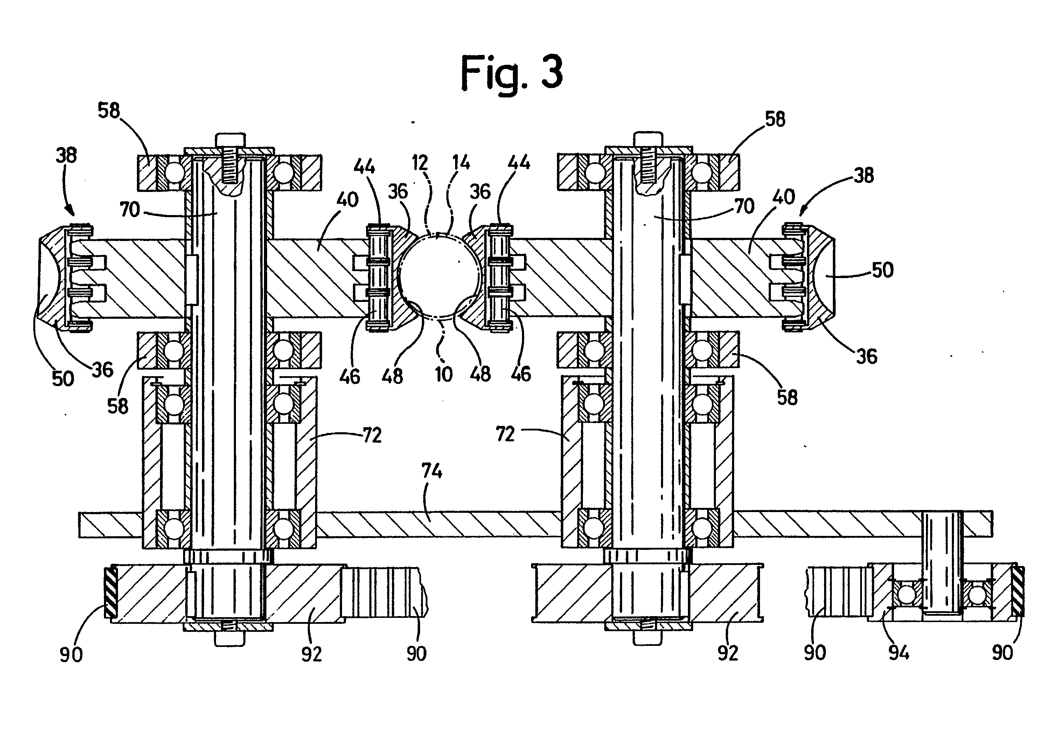

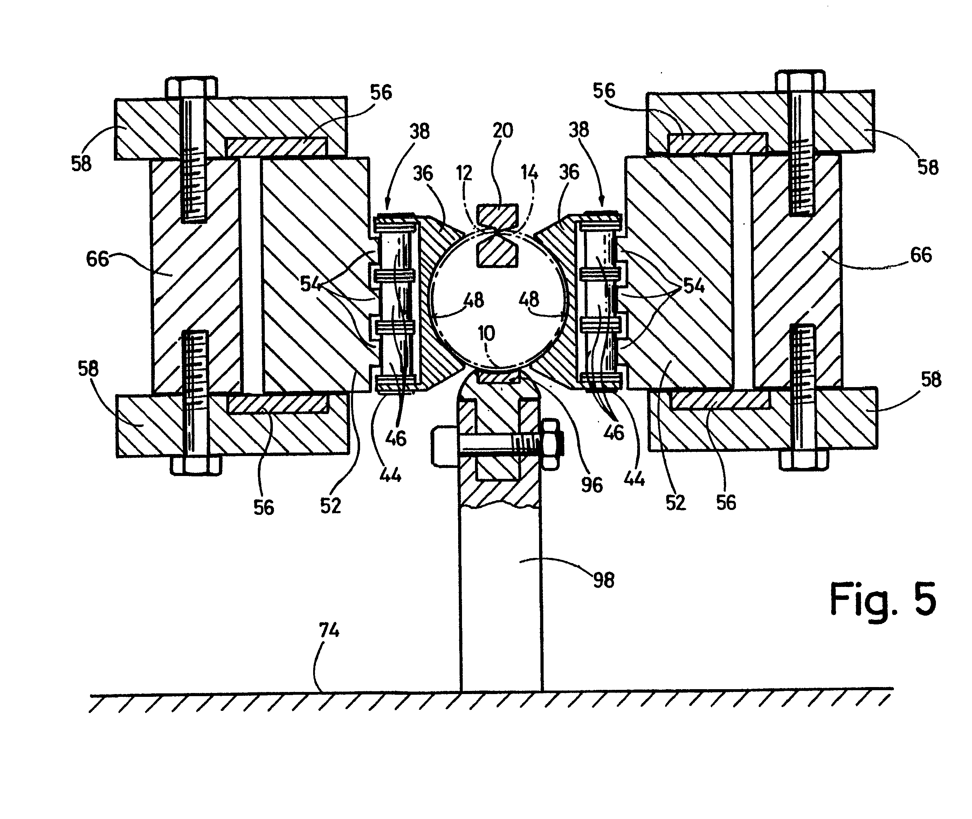

Die beiden Antriebsräder 40 sind an je einer senkrechten Welle 70 befestigt, die in je einer Büchse 72 gelagert ist. Die beiden Büchsen 72 sind an einer gemeinsamen, ortsfesten Grundplatte 74 befestigt. Die beiden Paare zusammengehöriger Wangen 58 sind auf je einer der beiden Wellen 70 gelagert, sodaß sie sich um die zugehörige Welle aus ihrer in Fig. 1 bis 5 abgebildeten Betriebsstellung voneinander weg in eine Wartungsstellung schwenken lassen.

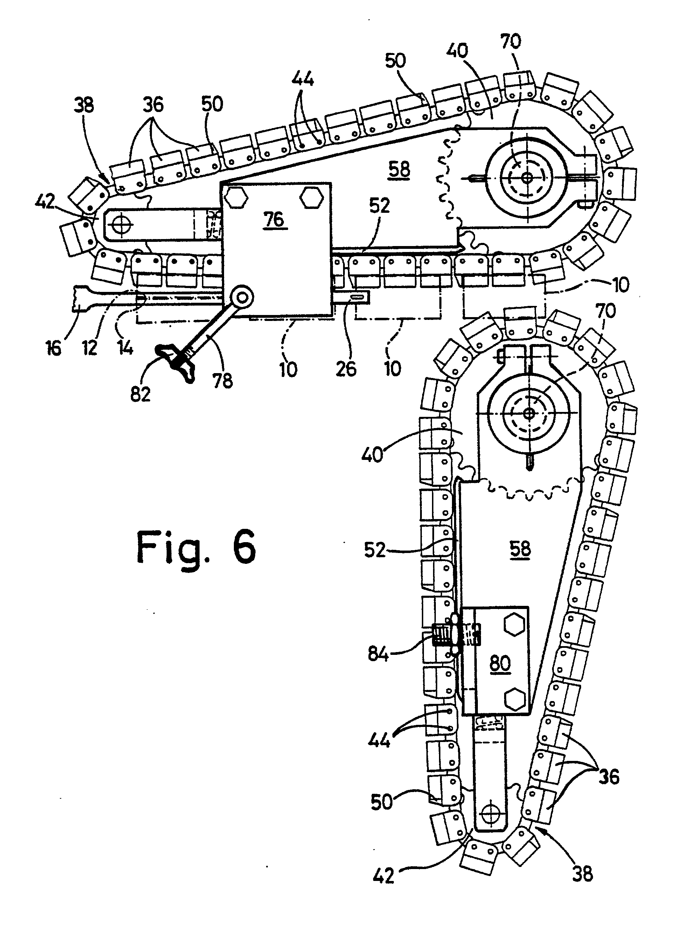

In Fig. 6 ist ein Paar Wangen 58 samt zugehörigen Vorrichtungsteilen, insbesondere Kette 38 samt Führungselementen 36 und Kettenspannrad 42, in die Wartungsstellung geschwenkt, während das andere Paar Wangen 58 samt zugehörigen Vorrichtungsteilen noch seine Betriebsstellung einnimmt. An der oberen Wange 58 eines der beiden Wangenpaare ist eine Schloßplatte 76 befestigt, an der ein Zuganker 78 schwenkbar gelagert ist. An der oberen Wange 58 des anderen Wangenpaars ist in entsprechender Weise eine Schloßplatte 80 befestigt, die sich in der Betriebsstellung der Vorrichtung mittels des Zugankers 78 und eines auf diesen aufgeschraubten Schraubgriffs 82 mit der Schloßplatte 76 zusammenspannen läßt. Der Abstand, den die achsparallelen Kettenstränge der beiden Ketten 38 in der Betriebsstellung voneinander einhalten, wird durch eine einstellbare Anschlagschraube 84 bestimmt, die in die Schloßplatte 80 eingeschraubt ist und mit einer ihrer Stirnflächen gegen die Schloßplatte 76 stößt.

Die beiden Wellen 70 sind gegensinnig mit genau gleicher Geschwindigkeit antreibbar; zu diesem Zweck ist ein regelbarer Elektromotor 86 über ein Zahnritzel 88 und einen Zahnriemen 90 mit zwei Zahnrädern 92 verbunden, die auf je einer der Wellen 70 befestigt sind. Der Zahnriemen 90 umschlingt zusätzlich ein Umlenkrad 74, das an der Grundplatte 74 gelagert ist.

In den Zeichnungen ist dargestellt, wie vier Zargen 10 in festgelegten Abständen hintereinander die im vorstehenden bechriebene Vorrichtung durchlaufen und dabei von den Führungselementen 36 an den achsparallelen Kettensträngen geführt sind. In der Schweißzone werden die Längsränder 12 und 14 durch den Strahl 24 miteinander verschweißt. Die fertiggeschweißten Zargen 10 werden danach zwischen den achsparallelen Kettensträngen weitergefördert und schließlich in einem verhältnismäßig großen Abstand von der Schweißebene B abgegeben, beispielsweise an eine weiterverarbeitende Vorrichtung.

Um die Führung der Zargen 10 noch weiter zu verbessern, ist unterhalb der Gleitschiene 20 eine Magnetschiene 96 auf Stützen 98 befestigt. Die Zargen 10 gleiten in einem ihren Längsrändern 12 und 14 diametral gegenüberliegenden Bereich auf der Magnetschiene 96, ehe und während sie von den Führungselementen 36 erfaßt werden. Dadurch wird sichergestellt, daß die Zargen 10 genau eine vorbestimmte Lage in bezug auf die Führungselemente 36 einnehmen. Die Magnetstärke ist so gewählt, daß die Reibungskraft zwischen jeder Zarge 10 und der Magnetschiene 96 mit der Summe der Reibungskräfte zwischen den Längsrändern 12 und 14 und der Gleitschiene 20 mindestens ungefähr übereinstimmt. Dadurch stehen die Momente dieser Reibungskräfte wenigstens anähernd im Gleichgewicht und können die Zarge 10 deshalb nicht verkanten.

## Patentansprüche

1. Vorrichtung zum Hindurchführen gerundeter Werkstücke (10) aus Blech durch die Schweisszone einer Maschine zum Verschweissen der Längsränder (12, 14) der Werkstücke (10), mit Gruppen von beweglichen Führungselementen (36), die einander in bezug auf die Werkstücke (10) gegenüberliegen und auf diese radiale Führungskräfte ausüben, wobei die Führungelemente (36) jeder Gruppe an einer endlosen, um ein Antriebsrad (40) und ein Spannrad (42) geführten Kette (38) angeordnet sind, die einen in Bewegungsrichtung (Achse A) der Werkstücke (10) verlaufenden Kettenstrang (38) aufweist, der beiderseits einer die Schweisszone enthaltenden, zur genannten Bewegungsrichtung normalen Ebene (Schweissebene B) durch eine Schiene (52) abgestützt ist, dadurch gekennzeichnet, dass wenigstens eine der Ketten (38) zusammen mit der zugehörigen Schiene (52) und dem Spannrad (42) um das zugehörige Antriebsrad (40) herum von der gegenüberliegenden Kette (38) wegschwenkbar ist.

2. Vorrichtung nach Anspruch 1, dadurch gekennzeichnet, dass jede der mit der zugeordneten Kette (38) wegschwenkbaren Schienen (52) an zwei Federn (64) radial abgestützt ist, die in Bewegungsrichtung der Werkstücke (10) gegeneinander versetzt und unabhängig voneinander einstellbar sind.

3. Vorrichtung nach einem der Ansprüche 1 oder 2 mit einer die Längsränder (12, 14) der Werkstücke (10) führenden Gleitschiene (20), dadurch gekennzeichnet, dass der Gleitschiene (20) diametral gegenüber eine die Werkstücke (10) zusätzlich führende Magnetschiene (96) angeordnet ist.

4. Vorrichtung nach einem der Ansprüche 1 bis 3, dadurch gekennzeichnet, dass förderstromaufwärts von den Ketten (38) eine Führungshülse (18) angeordnet ist, die sich in Bewegungsrichtung der Werkstücke (10) trichterförmig verengt und mindestens einen axialen Schlitz (34) aufweist, längs dessen eine Klinke (32) zum Einschieben von aufeinanderfolgenden Werkstücken (10) zwischen die Ketten (38) bewegbar ist.

5. Vorrichtung nach einem der Ansprüche 1 bis 4 zum Hindurchführen von aufeinanderfolgenden Werkstücken (10) gegebener Länge, dadurch gekennzeichnet, dass jede der Schienen (52) sich ununterbrochen und geradlinig zwischen einem Anfang und einem Ende erstreckt, deren Abstand von der Schweissebene (B) grösser ist als die Länge jedes einzelnen Werkstücks (10).

## Claims

1. An apparatus for conveying rounded workpieces (10) of sheet metal through a welding zone of a machine for welding the longitudinal edges (12, 14) of the workpieces (10), having groups of movable guide elements (36) which are situated opposite one another with respect to the workpieces (10) and exert radial guiding forces on these, wherein the guide elements (36) of each group are disposed on an endless chain (38) which is guided round a drive wheel (40) and a tension wheel (42), and which comprises a chain strand (38) extending in the direction of movement (axis A) of the workpieces (10) and supported by a rail (52) at both sides of a plane (welding plane B) containing the welding zone and normal to said direction of movement, characterised in that at least one of the chains (38) together with the associated rail (52) and the tension wheel (42) can be swung round the associated drive wheel (40) away from the opposite chain (38).

2. An apparatus according to Claim 1, characterised in that each of the rails (52) which can be swung away with the associated chain (38) is radially supported on two springs (64) which are offset in relation to one another in the direction of movement of the work-pieces (10) and are adjustable independently of on another.

3. An apparatus according to either of the Claims 1 or 2 having a slide rail (20) guiding the longitudinal edges (12, 14) of the workpieces (10), characterised in that the slide rail (20) is situated diameterically opposite a magnetic rail (96) additionally guiding the workpieces (10).

4. An apparatus according to any one of Claims 1 to 3, characterised in that disposed upstream of the chains (38) in the conveying direction is a guide sleeve (18) which narrows in the form of a funnel in the direction of movement of the workpieces (10) and has at least one axial slit (34) along which a dog (32) can be moved to push successive workpieces (10) in between the chains (38.

5. An apparatus according to any one of Claims 1 to 4 for conveying through successive workpieces (10) of given length, characterised in that each of the rails (52) extends without interruption and in a straight line between a beginning and an end, the distance of which from the welding plane (B) is greater than the length of each individual workpiece (10).

## Revendications

1. Dispositif de guidage de pièces ouvrées (10) cintrées, en tôle, à travers la zone de soudage d'une machine à souder les bords longitudinaux (12, 14) des pièces (10), comportant des groupes d'éléments de guidage (36) mobiles qui sont opposés les uns aux autres par rapport aux pièces (10) et exercent sur celles-ci des forces de guidage radiales, les éléments de guidage (36) de chaque groupe étant disposés sur une chaîne (38) sans fin, guidée autour d'une roue d'entraînement (40) et d'une roue de tension (42), qui comporte un brin de chaîne (38) s'étendant dans la direction de déplacement (axe A) des pièces (10), et qui prend appui de part et d'autre d'un plan (plan de soudage B) contenant la zone de soudage, perpendiculaire à cette direction de déplacement, par l'intermédiaire d'un rail (52), caractérisé en ce qu'au moins l'une des chaînes (38) peut basculer avec le rail correspondant (52) et la roue de tension (42), autour de la roue d'entraînement correspondante (40), pour s'éloigner de la chaîne opposée (38).

2. Dispositif selon la revendication 1, caractérisé en ce que chacun des rails (52) basculant avec la chaîne associée (38), prend appui radialement sur deux ressorts (64) qui sont décalés l'un par rapport à l'autre dans la direction de déplacement des pièces (10), et sont réglables indépendamment l'un de l'autre.

3. Dispositif selon l'une des revendications 1 ou 2 avec un rail de glissement (20) guidant les bords longitudinaux (12, 14) des pièces (10), caractérisé en ce que le rail de glissement (20) est diamétralement opposé à un rail magnétique (96) guidant en plus les pièces d'ouvrage (10).

4. Dispositif selon l'une des revendications 1 à 3, caractérisé en ce qu'on dispose en amont des chaînes (38), un manchon de guidage (18) qui se rétrécit en forme de cône dans le sens de déplacement des pièces (10), et présente au moins une fente axiale (34) le long de laquelle se déplace un cliquet (32), pour insérer des pièces (10) successives entre les chaînes (38).

5. Dispositif selon l'une des revendications 1 à 4 pour le guidage de pièces (10) successives de longueur donnée, caractérisé en ce que chacun des rails (52) s'étend sans interruption et en ligne droite entre un début et une fin, dont la distance au plan de soudage B, est supérieure à la longueur de chaque pièce (10) .

# Fig. 1

Fig. 2

# Fig. 3

EP 0 243 795 B1

Fig. 4

Fig. 5

EP 0 243 795 B1

Fig. 6